(19) 

Europäisches
Patentamt
European
Patent Office
Office européen
des brevets

(11) **EP 1 545 081 B1**

(12) **EUROPEAN PATENT SPECIFICATION**

(45) Date of publication and mention
of the grant of the patent:
**14.05.2008 Bulletin 2008/20**

(51) Int Cl.:
**H04L 25/03** (2006.01)

(21) Application number: **03293227.9**

(22) Date of filing: **18.12.2003**

(54) **Method for soft decoding with propability value correction**

Verfahren zur Softdekodierung mit Wahrscheinlichkeitswertkorrektur

Procédé de décodage doux avec une correction de la valeur de probabilité

(84) Designated Contracting States:
**AT BE BG CH CY CZ DE DK EE ES FI FR GB GR
HU IE IT LI LU MC NL PT RO SE SI SK TR**

(43) Date of publication of application:
**22.06.2005 Bulletin 2005/25**

(73) Proprietors:
• **Mitsubishi Electric Information Technology
Centre
Europe B.V.
1119 NS Schiphol Rijk (NL)**
Designated Contracting States:
**FR**
• **MITSUBISHI DENKI KABUSHIKI KAISHA
Chiyoda-ku
Tokyo 100-8310 (JP)**
Designated Contracting States:
**AT BE BG CH CY CZ DE DK EE ES FI GB GR HU
IE IT LI LU MC NL PT RO SE SI SK TR**

(72) Inventors:
• **Gresset, Nicolas
CS 10806
35708 Rennes Cedex 7 (FR)**
• **Boutros, Joseph
Ecole Nat. Supérieure des Télécom.
75013 Paris (FR)**

• **Brunel Loic
CS 10806
35708 Rennes Cedex 7 (US)**

(74) Representative: **Saint-Marc-Etienne, Christophe
Andréas
Cabinet Le Guen & Maillet,
5, place Newquay,B.P. 70250
35802 Dinard Cedex (FR)**

(56) References cited:
**EP-A- 0 689 312        US-A- 5 995 550**

• **BOUTROS J ET AL: "soft-input soft-output lattice
sphere decoder for linear channels"
GLOBECOM'03. 2003 - IEEE GLOBAL
TELECOMMUNICATIONS CONFERENCE.
CONFERENCE PROCEEDINGS. SAN
FRANCISCO, CA, DEC. 1 - 5, 2003, IEEE GLOBAL
TELECOMMUNICATIONS CONFERENCE, NEW
YORK, NY: IEEE, US, vol. 3 OF 7, 1 December 2003
(2003-12-01), pages 1583-1587, XP002279309
ISBN: 0-7803-7974-8**
• **STUBER G L: "SOFT-LIMITER RECEIVERS FOR
CODED DS/DPSK SYSTEMS" IEEE
TRANSACTIONS ON COMMUNICATIONS, IEEE
INC. NEW YORK, US, vol. 38, no. 1, 1990, pages
46-53, XP000102580 ISSN: 0090-6778**

**EP 1 545 081 B1**

## EP 1 545 081 B1

**Description**

The present invention relates to a method for interpreting at least one signal transmitted by means of at least one transmitting antenna and received by means of at least one receiving antenna, which method includes:

- a symbol listing step for producing a list of symbols selected among predetermined symbols which may potentially be received by means of said at least one receiving antenna, each listed symbol being represented by at least one bit,
- a marginalization step for processing said listed symbols in order to produce at least one probability value to be associated to said at least one bit, and
- a decoding step for refining said at least one probability value by taking into account knowledge pertaining to an encoding scheme used for encoding the received signal, a refined probability value produced in the course of the decoding step being intended to be used as an *a priori* probability value during a subsequent marginalization step.

Such an interpreting method may be used in telecommunication systems in which multiple antennas are used at a receiver end and/or at a transmitter end of a wireless link, which systems are called Multiple Input Multiple Output systems (further referred to as MIMO systems). MIMO systems have been shown to offer large transmission capacities compared to those offered by single antenna systems. In particular, MIMO capacity increases linearly with the number of transmitting or receiving antennas, whichever the smallest, for a given Signal-to-Noise Ratio and under favourable uncorrelated channel conditions. MIMO techniques are thus likely to be used in future wireless systems intended to provide large spectral efficiencies or, alternatively, reduce the transmitting power required for obtaining a spectral efficiency equivalent to that which is obtained in current telecommunication systems. Such MIMO techniques will very likely be combined with multi-carrier modulation techniques like OFDM (standing for Orthogonal Frequency Division Multiplex) and MC-CDMA (standing for MultiCarrier-Code Division Multiple Access) techniques, whose use in future wireless systems is also considered.

A particular type of MIMO systems makes use of a Bit Interleaved Coded Modulation technique, further referred to as BICM, according to which the transmitter includes a channel encoder intended to apply an encoding, e.g. by means of a convolutional code or of a turbo code, to uncoded data bits, and to provide a binary stream to an interleaver. This interleaver will then deliver permutated bits, which are to be divided into word sequences intended to be transformed into a series of coded symbols featuring each a plurality of components, the components of a same symbol being intended to be transmitted during a same time chip by respective transmitting antennas.

Transmitted symbols are to be interpreted on the receiver end, which is usually performed in MIMO systems of the BICM type by means of an iterative space-time interpreting process, which iterative process is intended to produce estimates of the original uncoded data bits on the basis of which the transmitted symbols have been generated. The spatial diversity induced by the use of multiple transmitting and receiving antennas eases such a decoding, since this diversity provides a larger amount of information than that which would be provided by a single signal transmitted through a single communication channel.

Commonly used iterative interpreting methods require an initial creation, during a symbol listing step, of a limited list of symbols to which initial probability values are to be associated during a subsequent marginalization step. The initial probability value associated with a given listed symbol may for example consist in a metric representing the distance between the given listed symbol and the received symbol. The probability values thus obtained may be refined by making use, in a subsequent decoding step, of additional knowledge pertaining to the encoding scheme which has been used originally for encoding the received signal. The refined probability value produced for each bit belonging to a same set of bits representative of all listed symbols by such a decoding step may then be used, in an *a posteriori* or, preferably, in an extrinsic form from which *a priori* information related to each bit under consideration has been individually removed, for constituting *a priori* information to be taken into account in addition to the above-described metrics during execution of another marginalization step in a subsequent iteration of the iterative interpreting method.

The inventors have observed that situations may occur, in which all listed symbols produced by the symbol listing step are such that at least one of the bits representing the listed symbols is invariant from any one listed symbol to another. In other terms, the probability for this bit to have its actual value will be automatically set to 1 at the end of the marginalization step, the probability for this bit to have another value being conversely set to 0.

In such a situation, the probability value will no longer be a soft value intended to be reused in the iterative process and then refined. On the contrary, such an integer probability value will be a non-refineable hard value, indicative of an irrevocable decision and likely to disturb the iterative process and to cause decoding errors.

The invention aims at solving this problem, by providing an interpreting method in which hard probability values resulting from a lack of diversity in the values of the bits representing the listed symbols are prevented from disturbing an iterative process like the one described above.

Indeed, a method according to the opening paragraph is characterized according to the invention in that it further includes:

- a hard value detection step for detecting situations in which at least one of the bits representing the listed symbols is invariant from any one listed symbol to another, and
- a probability value correction step for changing an integer probability value associated to such an invariant bit into a non-integer value.

The invention allows to correct integer probability values, and thus to prevent them from producing significant adverse effects on an iterative interpreting process, by providing for their detection and their ensuing modification and/or transformation into non-integer probability values.

Among various existing symbol listing schemes, a so-called list sphere selecting technique may be used for selecting, among predetermined symbols forming a lattice constellation of symbols which may potentially be received, estimated symbols which may represent a transmitted symbol. A metric representing the distance between the received symbol and a given estimated symbol of the lattice constellation may represent the probability value associated with said estimated symbol. In order to limit the extent of the search for such estimated symbols, only the most likely symbols of the lattice are examined, i.e. those closest to the received symbol, such a limitation being performed by only examining symbols which are included in a sphere having a predetermined radius and centred on the received symbol. Such list sphere selecting schemes have been described in European Patent applications EP 1 215 839 A1 and EP 1 221 773 A1.

The paper of J.Boutros, N Gresset, L Brunel and M. Fossorier "entitled Soft-input Soft output lattice sphere decoder for linear channels" published in GLOBELCOM 03. 2003 describes the use of a shifted spherical list for performing a soft output lattice decoding, the center of said list being a point of maximum likelihood instead of a point representative of the received symbol. This paper further discloses a method of determining the radius of the chosen sphere, the purpose of which method being essentially to ensure that a sufficient predetermined number of points be actually included in said sphere, regardless on the actual value of the symbols corresponding to said points.

According to a first variant of the invention, the symbols selected for forming part of the list produced in the course of the symbol listing step being included in a volume having a predetermined envelope, e.g. a sphere as described above, the probability value correction step comprises a virtual symbol creating step in the course of which a predetermined *a priori* probability value is associated with at least one point belonging to said predetermined envelope in order to create at least one virtual symbol which will be deemed featuring a different value for the bit which is invariant among all listed symbols, when said virtual symbol will be processed, in the course of the marginalization step, simultaneously with said listed symbols.

Such a variant of the invention enables to add to the listed symbols at least one non-listed symbol featuring a different value for the bit which is invariant among all listed symbols, which will automatically cause the marginalization step to allocate a non-integer probability value to said bit.

This first variant of the invention will enable to change the integer probability value associated to the invariant bit into a non-integer probability value, regardless of the predetermined *a priori* probability value chosen for the virtual symbol. The choice of this predetermined probability value may, however, have an impact on the performance of the iterative interpreting process.

According to a particular embodiment of this first variant of the invention, the predetermined *a priori* probability value may be chosen equal to $1/2^{(m.Nt-1)}$, where m is the number of bits representing a component of each listed symbol and Nt the number of transmitting antennas, such a predetermined *a priori* probability value being thus relatively neutral since it means that each of the m.Nt bits belonging to the set of bits representing the virtual symbol, excepting of course the bit which is invariant for the listed symbols, has a 50% chance to be equal to 0 or, conversely, to 1.

According to another particular embodiment of this first variant of the invention, the predetermined *a priori* probability value may be chosen equal to a product of selected values, each of which being formed by the highest probability value produced by a previous decoding step in association with each bit, which will mean that the virtual symbol will be one of the most likely representatives of the received symbol, which amounts to a worst-case scenario according to which such a highly likely representative of the received symbol was almost overlooked.

According to yet another particular embodiment of this first variant of the invention, the predetermined *a priori* probability value is chosen equal to a product of selected values, each of which being formed by the lowest probability value produced by a previous decoding step in association with each bit having a non-integer probability value, which will mean that the virtual symbol will be one of the less likely representatives of the received symbol, which amounts to a best-case scenario according to which only a very unlikely representative of the received symbol was almost overlooked.

In this other embodiment of the first variant, the selection is done only among non-integer probability values in order to prevent values equal to 0 from nullifying the predetermined *a priori* probability value which is to be associated with the virtual symbol.

According to a second variant of the invention, the probability value correction step comprises a list modifying step in the course of which at least one additional symbol is added to the original list, said at least one additional symbol being obtained by selecting at least one listed symbol among the symbols included in the original list and complementing at least the bit which is invariant from any one symbol listed in said original list to another.

This second variant of the invention may be used individually or cumulatively with the first variant described above.

Such a variant of the invention will ensure that the symbols listed in the modified list will include at least one symbol featuring a different value for the bit which is invariant among all originally listed symbols, which will automatically cause the marginalization step to allocate a non-integer probability value to said bit, whether the original list has been obtained by using a list sphere selecting technique or not.

Such a result may be obtained automatically by randomly singling out any one of the listed symbols and simply complementing only the invariant bit, or, conversely, the whole set of bits representing this symbol.

A prior knowledge of all other symbols of the lattice constellation and of a symbol being the most likely representative of the received symbol may, however, also be used for electing the at least one symbol to be added to the original list of symbols, in order to enhance the performance of the interpreting method according to this second variant of the invention.

According to a particular embodiment of this second variant of the invention, the symbol to be added to the original list may for example be constituted by a particular symbol of the lattice constellation belonging to a population for which the bit which is invariant in all originally listed symbols has a different value, while being the member of said population which is the closest to the symbol being the most likely representative of the symbol carried by the received signal.

The distance separating the most likely representative of the symbol carried by the received signal and the symbol to be added to the original list may be construed as an Euclidian distance or as a distance in the Hamming sense.

According to another particular embodiment of this second variant of the invention, the symbol selected in the original list in the course of the list modifying step is a symbol identified as being the most likely representative of the symbol carried by the received signal.

According to a third variant of the invention, the probability value correction step may further include a substitution step for substituting a predetermined non-integer substitution value for the integer probability value associated to the bit which is invariant from any one symbol listed in said original list to another.

Such a variant of the invention guarantees that no integer probability values will be left free to damage the soft-decision iterative interpreting process described above, since they will automatically be replaced by non-integer values. This third variant of the invention may be used individually or cumulatively with the first and/or second variants described above.

The substitution value may for example be chosen equal to $1-\varepsilon$ if the integer probability value is 1 and equal to $\varepsilon$ if the integer probability value is 0, where $\varepsilon$ is a predetermined non-integer value chosen lower than 1/2.

The inventors have observed that decoding means intended to carry out the decoding step may output integer refined probability values, even if all probability values provided to said decoding means are of a non-integer nature. Such situations may occur due to approximations which will be made during the computational process leading to the refined probability values. As already explained above, such non-integer refined probability values may have an adverse impact on the performance of the iterative interpreting process and lead to errors in the interpretation.

In an advantageous embodiment of the invention, a method as described above should thus preferably also include :

- an integer refined probability detection step for detecting situations in which at least one refined probability value produced by the decoding step is an integer value, and
- a thresholding step for replacing such an integer refined probability value by a predetermined non-integer threshold value.

The threshold value may for example be chosen equal to $1-\delta$ if the integer refined probability value is 1 and equal to $\delta$ if the integer refined probability value is 0, where $\delta$ is a predetermined non-integer value chosen lower than 1/2.

According to one of its harware-related aspects, the invention also relates to a telecommunication system including at least one transmitter provided with at least one transmitting antenna and at least one receiver provided with at least one receiving antenna, which receiver includes:

- symbol listing means tor producing a list of symbols selected among predetermined symbols which may potentially be received by means of said at least one receiving antenna, each listed symbol being represented by at least one bit,
- marginalization means for processing said listed symbols in order to produce at least one probability value to be associated to said at least one bit, and
- decoding means for refining said at least one probability value by taking into account knowledge pertaining to an encoding scheme used for encoding the received signal, a refined probability value produced in the course of the decoding step being intended to be used as an *a priori* probability value during a subsequent marginalization step, telecommunication system characterized in that the receiver further includes:

- hard value detection means for detecting situations in which at least one of the bits representing the listed symbols is invariant from any one listed symbol to another, and

- probability value correction means for changing an integer probability value associated to such an invariant bit into a non-integer value.

According to another of its hardware-related aspects, the invention also relates to a communication device provided with at least one receiving antenna and including:

- symbol listing means for producing a list of symbols selected among predetermined symbols which may potentially be received by means of said at least one receiving antenna, each listed symbol being represented by at least one bit,
- marginalization means for processing said listed symbols in order to produce at least one probability value to be associated to said at least one bit, and
- decoding means for refining said at least one probability value by taking into account knowledge pertaining to an encoding scheme used for encoding the received signal, a refined probability value produced in the course of the decoding step being intended to be used as an *a priori* probability value during a subsequent marginalization step,

which communication device further includes:

- hard value detection means for detecting situations in which at least one of the bits representing the listed symbols is invariant from any one listed symbol to another, and
- probability value correction means for changing an integer probability value associated to such an invariant bit into a non-integer value.

The characteristics of the invention mentioned above, as well as others, will emerge more clearly from a reading of the following description given in relation to the accompanying figures, amongst which:

Fig.1 is a block diagram showing a highly simplified MIMO telecommunication system in which an interpreting method according to the invention may advantageously be used;
Fig.2 is a diagram showing an original lattice constellation formed by transmitted symbols at a transmitting end and a transformed lattice constellation formed by symbols which may represent the transmitted symbols at a receiving end;
Fig.3 is a diagram depicting a symbol listing step carried out in an interpreting method according to the invention; and
Fig 4 is a diagram depicting iterative interpreting methods according to first, second and third variants of the invention.

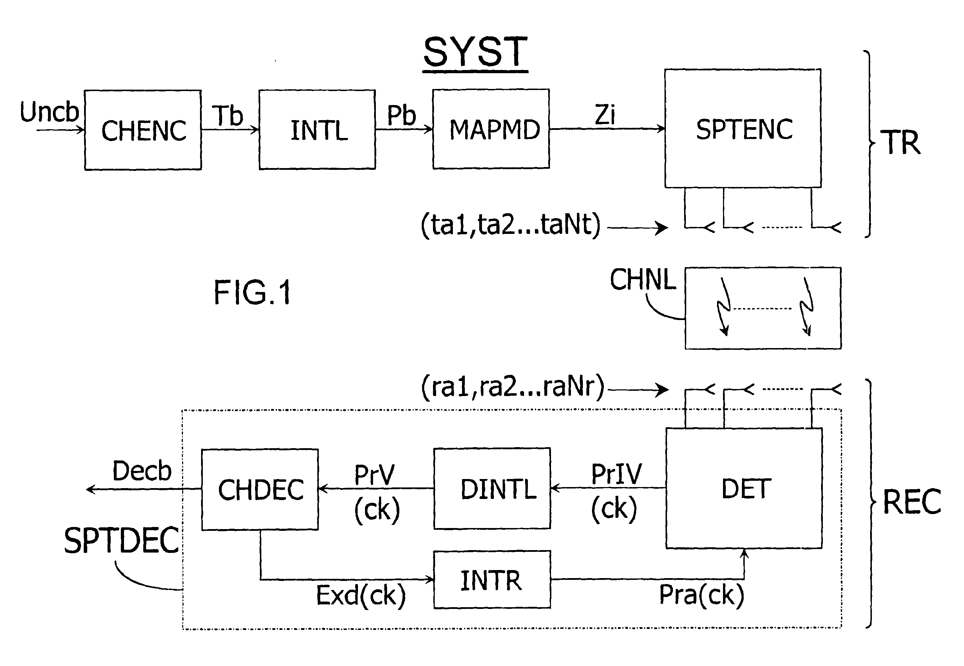

Fig.1 diagrammatically shows a telecommunication system including at least one transmitter TR and one receiver REC, intended to exchange signals through multiple communication channels CHNL established between Nt transmitting and Nr receiving antennas (ta1,ta2...taNt) and (ra1,ra2...raNr), respectively.

The transmitter TR shown in the example depicted here includes a channel encoder CHENC intended to apply an encoding, e.g. by means of a convolutional code or of a turbo code, to uncoded data bits Uncb, and to provide a binary stream Tb to be transmitted. The transmitter TR includes an interleaver INTL intended to generate permutated bits Pb, such an interleaving being useful for a later processing on the receiver side, since it will allow to obtain uncorrelated data. The permutated bits Pb are then divided into sequences of Nt words of at least one bit each, which word sequences are then mapped, i.e. transformed into a series of coded symbols $Z_i$ by a mapping and modulation module MAPMD, each symbol $Z_i$ then featuring Nt components. Successive symbols $Z_i$ are then fed to symbol encoding means essentially formed by a space-time encoder SPTENC, which performs a processing of said symbols $Z_i$ before their transmission.

In the known state of the art, the Nt components of each symbol $Z_i$ are intended to be transmitted during a same time chip by respective transmitting antennas (ta 1,ta2...taNt).

The receiver REC shown in the example depicted here includes a space-time decoder SPTDEC intended to produce decoded data bits Decb which should ultimately correspond to the originally uncoded data bits Uncb. This space-time decoder SPTDEC includes a space-time detector DET intended to process data carried by signals received by means of the receiving antennas (ra1,ra2...raNr), and to produce probability values $PrIV(c_k)$ related to estimates of the transmitted permutated bits Pb, which probability values are intended to be de-interleaved by a de-interleaver DINTL which is to output soft probability values $PrV(c_k)$ related to estimates of bits included in the binary stream Tb. A bit decoder included in the receiver REC, further referred to as channel decoder CHDEC, is intended to generate the decoded data bits Decb on the basis of said probability values $PrV(c_k)$. Indeed, this channel decoder CHDEC will make use of prior knowledge pertaining to the encoding scheme used by the channel encoder CHENC included in the transmitter TR for encoding the data bits Uncb, which prior knowledge will enable said channel decoder CHDEC to refine the probability values PrV(ck) delivered by the space-time detector DET via the de-interleaver DINTL.

According to a looped structure commonly used in the art, the space-time detector DET will make use of *a priori* information Pra(ck) generated in the course of previous decoding steps, and delivered by the channel decoder CHDEC in the form of extrinsic information Exd(ck) representative of said refined probability values through an interleaver INTR, which interleaver is identical to the interleaver INTL included in the transmitter TR.

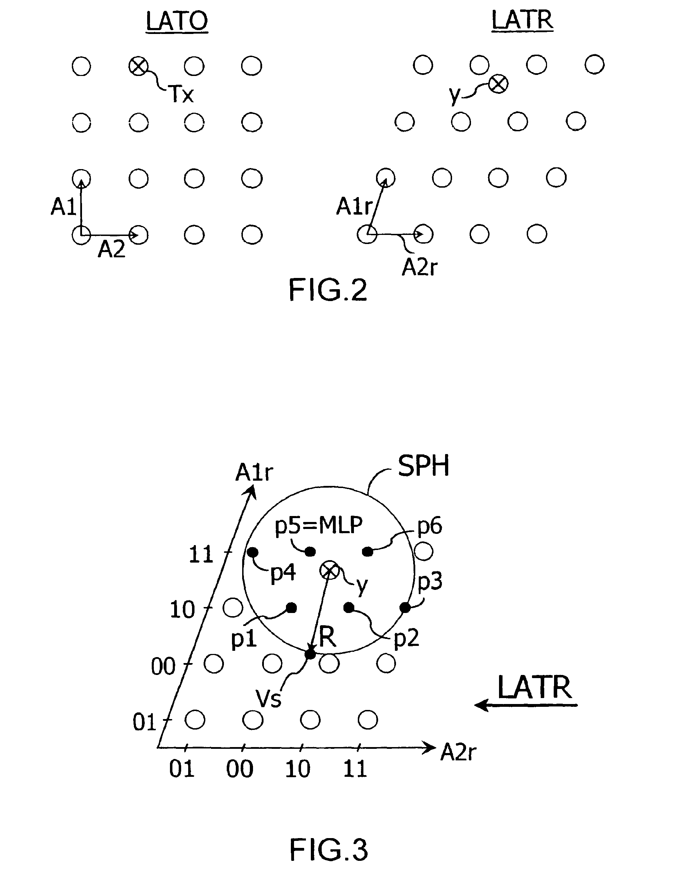

Fig.2 shows in two dimensions an original lattice constellation LATO constituted by symbols which may be transmitted by a transmitter as described above, and a second lattice constellation LATR constituted by symbols which may potentially be received by means of a receiver as described above. The original lattice constellation LATO is defined by a first basic vector system (A1, A2), the second lattice constellation LATR being defined by a second basic vector system (A1r, A2r), which is usually different from the first one because of channel communication conditions affecting signals exchanged between the transmitter and the receiver. Moreover, it appears that though a transmitted symbol Tx is by nature located on a point of the original lattice constellation LATO, a corresponding received symbol y is usually not located on a point of the second lattice constellation LATR because of noise affecting the communication channels established between the transmitter and the receiver.

If Y is a vector representative of the received symbol y, B a vector representative of a symbol originally transmitted, C a matrix representative of the channel or channels through which said symbol has been transmitted and N a vector representative of the noise affecting said communication channel or channels, the above explanations may be mathematically expressed by the equation: Y=C.B+N

Symbol decoding means at the receiver end are intended to provide a list of estimated symbols belonging to the second lattice constellation LATR, which estimated symbols may represent the transmitted symbol Tx. A metric representing the distance between the received symbol y and a given estimated symbol of the lattice constellation may be computed in order to provide a probability value associated with said estimated symbol. In order to limit the extent of the search for such estimated symbols, only the most likely symbols of the second lattice constellation LATR are to be examined, i.e. those symbols who are the closest to the received symbol y.

Fig.3 shows how such a limitation of the search for estimated symbols may be performed advantageously thanks to a particular listing scheme, according to which only those symbols pj (for j=1 to 6) which are included in a sphere SPH having a predetermined radius R will be included in the list produced in the course of the symbol listing step.

In such a symbol listing step, the sphere SPH may either be centered on the received symbol y, as is the case in the embodiment of the invention shown here, or may also be centered on a particular symbol MLP of the lattice constellation LATR, which symbol MLP will previously have been identified as being the most likely representative of the received symbol y.

The inventors have observed that situations may occur, in which all listed symbols produced by the symbol listing step are such that at least one of the bits representing the listed symbols is invariant from any one listed symbol to another.

Such will be the case, in the example depicted here, if p1 is represented by 1000, p2 by 1010, p3 by 1011, p4 by 1101, p5 by 1100, and p6 by 1110, in which case a first bit c0 of a set {c0, c1, c2, c3} of four bits ck (for k=0 to 3) representing all six listed symbols represented by the points pj (for j=1 to 6) is invariant and equal to "1".

In other terms, the probability for this bit c0 to have its actual value "1" will be automatically set to 1 at the end of the marginalization step, the probability for this bit c0 to have another value, e.g. "0" being then conversely set to 0.

In such a situation, these probability values will no longer be soft values fit to be reused in the iterative process and then refined. On the contrary, such integer probability values will be non-rcfineable hard values, indicative of irrevocable decisions and likely to disturb the iterative interpreting process and to cause decoding errors.

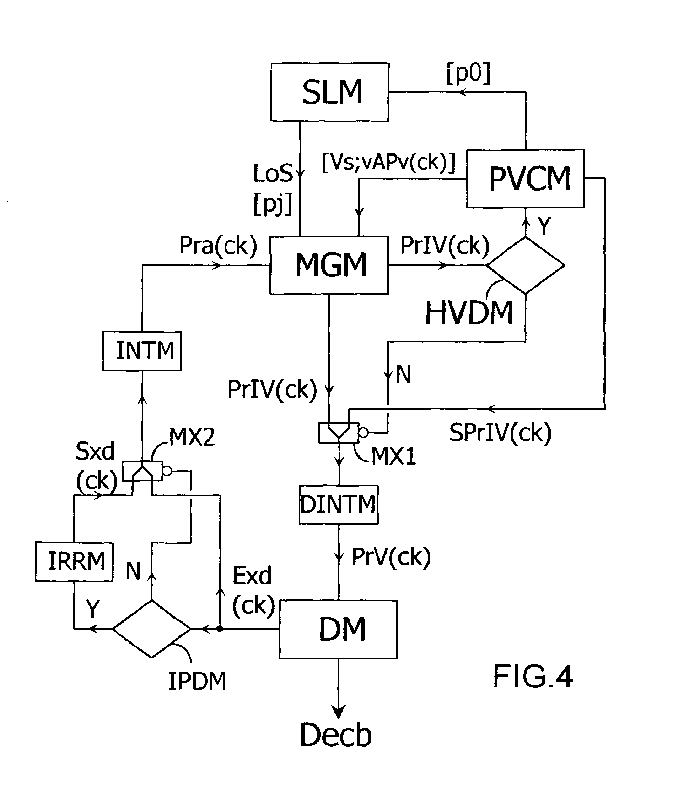

Fig.4 diagrammatically depicts interpreting methods according to first, second and third variants of the invention aiming at solving this problem, in which hard probability values resulting from a lack of diversity in the values of the bits representing the listed symbols are prevented from disturbing an iterative process like the one described above.

The method according to the present invention includes:

- symbol listing means SLM for producing, during a symbol listing step, a list LoS of symbols pj,
- marginalization means MGM for processing, during a marginalization step, the symbols included in said list LoS in order to produce an interleaved probability value PrIV(ck) to be associated to each of the bits ck belonging to a same set of bits used for representing all symbols pj,
- de-interleaving means DINTM for transforming, during a de-interleaving step, said interleaved probability values PrIV(ck) into de-interleaved probability values PrV(ck), and
- decoding means DM for refining, during a decoding step, the de-interleaved probability values PrV(ck) associated to the de-interleaved bits of the symbols included in the list LoS by taking into account knowledge pertaining to an encoding scheme used for encoding the received signal, a refined probability value Exd(ck) related to a given bit ck and produced by the decoding means DM being intended to be used as an *a priori* probability value Pra(ck) during a subsequent marginalization step after said refined probability value Exd(ck) will have been re-interleaved in the course of an interleaving step carried out by interleaving means INTM.

As known from those skilled in the art, an *a posteriori* probability value APP(ck=1) for the kth bit ck to be equal to 1, and an *a posteriori* probability value APP(ck=0) for the kth bit ck to be equal to 0 may respectively be expressed as follows:

$$APP(ck = 1) = \frac{\pi(ck = 1). \sum_{x \in LoS/ck=1} p(y|x). \prod_{l \neq k} \pi(cl = cl(x))}{\sum_{x \in LoS} p(y|x). \prod_{l} \pi(cl = cl(x))},$$

and

$$APP(ck = 0) = 1 - APP(ck = 1),$$

where p(ylx) represents a likelihood for receiving y if it is supposed that x has been transmitted, and π(cl=cl(x)) represents an *a priori* probability that the value of the 1th bit cl actually equals that of the 1th bit cl of a given symbol x belonging to the list of symbols LoS.

It should further be observed that π(cl=1)=Pra(cl) and π(cl=0)=1-Pra(cl), Pra(cl) representing an a priori probability value for the value of the 1th bit cl to be equal to 1.

An extrinsic probability value for said kth bit ck to be equal to 1, noted XPV(ck=1) and produced by the marginalization means MGM may thus be expressed as follows:

$$XPV(ck = 1) = \frac{\sum_{x \in LoS/ck=1} p(y|x). \prod_{l \neq k} \pi(cl = cl(x))}{\sum_{x \in LoS} p(y|x). \prod_{l \neq k} \pi(cl = cl(x))},$$

the use of such extrinsic values for feedback purposes being usually preferred to that of *a posteriori* probability values because an extrinsic value related to a given bit is freed from *a priori* information related to said given bit, which has been used for generating an *a posteriori* value associated with said given bit. In such a case, PrIV(ck)=XPV(ck=1).

As can be seen from the above equation, if, for example, ck=1 for each symbol x belonging to the list of symbols LoS, the extrinsic probability value XPV(ck=1) produced by the marginalization means MGM will necessarily be equal to 1, which will of course be wrong, since the list of symbols LoS is not exhaustive. Such a non-refineable hard value, indicative of an irrevocable and potentially erroneous decision is likely to disturb the iterative process described above and to cause decoding errors.

The method according to the invention thus further includes:

- hard value detection means HVDM for detecting, during a hard value detection step, situations in which at least one of the bits ck representing the listed symbols pj is invariant from any one listed symbol to another, and
- probability value correction means PVCM for changing, during a probability value correction step, an integer probability value associated to such an invariant bit into a non-integer value.

The invention allows to correct integer probability values, and thus to prevent them from producing significant adverse effects on the iterative interpreting process, by providing for their detection and ensuing modification and/or transformation into non-integer probability values.

According to a first variant of the invention, the symbols selected for forming part of the list produced by the symbol listing means SLM being included in a volume having a predetermined envelope, e.g. a sphere as described above, the probability value correction step comprises a virtual symbol creating step in the course of which a predetermined probability value vAPv is associated with at least one point belonging to said predetermined envelope in order to create a virtual symbol Vs which will be deemed featuring a different value for the bit which is invariant among all listed symbols, when said virtual symbol will be processed, by the marginalization means MGM, simultaneously with the symbols [pj] included in the list of symbols LoS produced by the symbol listing means SLM.

In the example described above in relation with Fig.3, where p1 was represented by 1000, p2 by 1010, p3 by 1011, p4 by 1101, p5 by 1100, and p6 by1110, the fact that the first bit c0 of the set {c0, c1, c2, c3} of four bits ck (for k=0 to 3) representing all six listed symbols corresponding to the points pj (for j=1 to 6) is invariant and equal to "1" will be detected by the hard value detection means HVDM.

This first variant of the invention enables to add to the listed symbols [pj] at least one non-listed virtual symbol Vs featuring, for the bit ck which is invariant among all listed symbols [pj], e.g. the bit c0, a value "0" instead of the value "1" said bit c0 has for all listed symbols pj (for j=1 to 6) in this example, which will automatically cause the marginalization means MGM to allocate a non-integer probability value to said bit c0.

The virtual symbol Vs being added to those already processed during a previous marginalization step, said virtual symbol Vs must be given a likelihood value p(y|Vs) and an *a priori* probability value vAPv(ck) (with ck=c0 in the example given above) if said virtual symbol is to be processed simultaneously with the listed symbols [pj] in the course of a subsequent marginalization step following the current probability value correction step.

The likelihood value p(y|Vs) of this virtual symbol Vs may be expressed as being proportional to $e^{-|y-Vs|^2/2.\sigma^2}$ if the noise affecting the communication channels is Gaussian with a variance $\sigma^2$, the expression $|y-Vs|$ representing the Euclidian distance between the received symbol y and the virtual symbol Vs. If the virtual symbol Vs belongs to the surface of a sphere of radius R centered on the received symbol y as in the example shown in Fig.3, the likelihood value p(y|Vs) will be proportional to $e^{-R^2/2.\sigma^2}$

In the example described above, the extrinsic probability value XPV(c0=1) for the bit c0 to be equal to 1, which probability value would be equal to 1 if only the listed symbols were considered, will then be expressed as :

$$XPV(c0=1) = \frac{\sum\limits_{x \in LoS / c0=1} p(y|x).\prod\limits_{l \neq k} \pi(cl = cl(x))}{e^{-|y-Vs|^2/2.\sigma^2}.vAPv(c0) + \sum\limits_{x \in LoS} p(y|x).\prod\limits_{l \neq k} \pi(cl = cl(x))}$$

This first variant of the invention enables to change the integer probability value PrIV(c0) associated to the invariant bit c0 into a non-integer probability value regardless of the predetermined *a priori* probability value vAPv(ck) chosen for the virtual symbol Vs. The choice of this predetermined *a priori* probability value vAPv(ck) may, however, have an impact on the performance of the iterative interpreting process.

According to a particular embodiment of this first variant of the invention, the predetermined *a priori* probability value vAPv(ck) may be chosen equal to $1/2^{(m.Nt-1)}$, where m is the number of bits representing a component of each listed symbol and Nt the number of transmitting antennas, such a predetermined *a priori* probability value vAPv(ck) being thus relatively neutral since it means that each of the m.Nt bits belonging to the set of bits representing the virtual symbol Vs, excepting of course the bit which is invariant for the listed symbols [pj], has a 50% chance to be equal to 0 or, conversely, to 1.

According to another particular embodiment of this first variant of the invention, the predetermined *a priori* probability value vAPv(ck) may be chosen equal to a product of selected values, each of which being formed by the highest of dual probability values produced by a previous decoding step in association with each bit.

Such an *a priori* probability value vAPv(ck) may thus be expressed as follows :

$$vAPv(ck) = \prod\limits_{l \neq k} \max[Pra(cl); 1 - Pra(cl)]$$

It should be noted here that the highest probability value which is selected for each 1th bit, according to this embodiment, is the highest between the *a priori* probability Pra(cl) for said bit to be equal to 1 and the *a priori* probability 1-Pra(cl) for said bit to be equal to 0.

This means that a virtual symbol Vs according to this embodiment of the first variant of the invention will be one of the most likely representatives of the received symbol y, which amounts to a worst-case scenario according to which such a highly likely representative of the received symbol y was almost overlooked.

According to yet another particular embodiment of this first variant of the invention, the predetermined *a priori* probability value vAPv(ck) is chosen equal to a product of selected values, each of which being formed by the lowest of dual probability values produced by a previous decoding step in association with each bit having a non-integer probability value.

Such an *a priori* probability value vAPv(ck) may thus be expressed as follows :

$$vAPv(ck) = \prod_{l \neq k / Pra(cl) \alpha \{0;1\}} \min\left[ Pra(cl); 1 - Pra(cl) \right]$$

It should be noted here that the lowest probability value which is selected for each 1th bit, according to this other embodiment, is the lowest between the *a priori* probability Pra(cl) for said bit to be equal to 1 and the *a priori* probability 1-Pra(cl) for said bit to be equal to 0.

This means that a virtual symbol Vs according to this other embodiment of the first variant of the invention will be one of the less likely representatives of the received symbol y, which amounts to a best-case scenario according to which only a very unlikely representative of the received symbol y was almost overlooked.

According to a second variant of the invention, the probability value correction step comprises a list modifying step in the course of which at least one additional symbol p0 is added to the original list, said at least one additional symbol being obtained by selecting at least one listed symbol among the symbols pj included in the original list LoS and complementing at least the bit, e.g c0 in the situation described above, which is invariant from any one symbol listed in said original list LoS to another.

Such a variant of the invention will ensure that the symbols listed in the modified list will include at least one symbol featuring a different value for the bit which is invariant among all originally listed symbols, which will automatically cause the marginalization step to allocate a non-integer probability value to said bit, whether the original list has been obtained by using a list sphere selecting technique or not.

Such a result may be obtained automatically by randomly singling out any one of the listed symbols pj and simply complementing only the invariant bit, or, conversely, the whole set of bits representing this symbol. The symbol corresponding to point p1 may thus be chosen, i.e. 1000, and may be transformed into either 0000, 0001, 0010, 0011, 0100, 0101, 0110 or 1111.

A prior knowledge of all other symbols of the lattice constellation and of a symbol being the most likely representative of the received symbol may, however, also be used for electing the at least one symbol to be added to the original list of symbols, in order to enhance the performance of the interpreting method according to this second variant of the invention.

According to a particular embodiment of the second variant of the invention, the symbol p0 to be added to the original list [pj] would then be constituted by a particular symbol belonging to a population for which the bit c0 is equal to 0, while being the closest, in the Euclidian or in the Hamming sense, to the maximum likelihood point MLP.

In the example depicted in Fig.3, the point p5 is the point MLP which is the most likely representative of the received symbol y, and is represented as 1100. Fig.3 depicts an example in which the lattice constellation LATR is two-dimensional, situation in which a symbol for which c0 is equal to 0 and which is closest to the symbol p5 is the symbol 0010, in the Euclidian sense, may be identified at a relatively low cost in terms of computing power. In situations where the lattice constellation LATR involves a high number of dimensions, e.g. several tenths of dimensions, such an identification process will require a huge computing power and is thus unrealistic if it is to be performed by a receiver whose operating energy is produced by a finite battery power source. In such a situation, the search for an additional symbol will first be made in the original lattice constellation LATO as shown in Fig.2, which is known to the receiver. This search will start from the symbol defined by the coordinates (11) and (00) given by the already known most likely representative point MLP, and be performed in a direction of variation of the invariant bit, in this example the reverse direction of that indicated by vector A1 in Fig.2. The label of the first symbol of the original lattice LATO encountered in this direction, for which the invariant bit c0 has a different value, is represented by a set of bits having a value 0000, which will identify, in the second lattice constellation LATR, the additional symbol p0 to be added to the original list [pj].

In the same configuration of the list of symbols depicted in Fig.3, the symbol of the second lattice constellation LATR for which c0 is equal to 0 and which is, in the Hamming sense, closest to the symbol p5 labelled 1100 will be the symbol 0100, since only the bit c0 has to be changed for passing from one to the other. This symbol 0100 would thus represent the additional symbol p0 to be added to the original list [pj], if only the Hamming criterion were considered.

According to another particular embodiment of this second variant of the invention, the symbol selected in the original list in the course of the list modifying step is a symbol identified as being the most likely representative of the symbol carried by the received signal. The symbol corresponding to point p5 will then be chosen, i.e. 1100, and may be transformed into its full complement 0011, or into partial complements 0010, 0100, etc. for producing one or more additional symbols p0.

According to a third variant of the invention, the probability value correction step may further include a substitution step for substituting a predetermined non-integer substitution value SPrIV(ck) for the integer probability value PrIV(ck) associated to the bit ck which is invariant from any one symbol listed in the original list of symbols LoS to another. This third variant is represented by means of a multiplexer MX1 intended to output either the probability value PRIV(ck) if no invariant bit has been detected by the hard value detection means HVDM (N=1), or the substitution value SPrIV(ck) if the probability value PRIV(ck) has been recognized as an integer value by the hard value detection means HVDM (N=0).

Such a variant of the invention guarantees that no integer probability values will be left free to damage the soft-decision iterative interpreting process described above, since they will automatically be replaced by non-integer values. This third variant of the invention may be used individually or cumulatively with the first and/or second variants described above.

The substitution value SPrIV(ck) may for example be chosen equal to $1-\varepsilon$ if the integer probability value is 1 and equal to $\varepsilon$ if the integer probability value is 0, where $\varepsilon$ is a predetermined non-integer value chosen lower than 1/2, for example $\varepsilon=10^{-5}$ or $10^{-6}$.

In the embodiment of the invention shown here, the above-described interpreting method further includes :

• integer refined probability detection means IPDM for detecting, during an integer refined probability detection step, situations in which at least one refined probability value Exd(ck) produced by the decoding step DS is an integer value, and

• thresholding means IRRM for replacing, during a thresholding step, such an integer refined probability value Exd(ck) by a predetermined non-integer threshold value Sxd(ck).

The threshold value Sxd(ck) may for example be chosen equal to $1-\delta$ if the refined probability value Exd(ck) is equal to 1 and equal to $\delta$ if the refined probability value Exd(ck) is equal to 0, where $\delta$ is a predetermined non-integer value chosen lower than 1/2, for example $\delta=10^{-5}$ or $10^{-6}$.

This is represented by means of a second multiplexer MX2 intended to output either the refined probability value Exd(ck) if it has been recognized as a non-integer value by the detection means IPDM (N=1), or the threshold value Sxd(ck) if the refined probability value Exd(ck) has been recognized as an integer value by the detection means IPDM (N=0).

The inventors have observed that the decoding means DM intended to carry out the decoding step may sometimes output an integer refined probability value, even if aii probability values provided to said decoding means are of a non-integer nature. Such situations may occur due to approximations which will be made during the computational process leading to the refined probability values. As already explained above, a refined probability value Exd(ck) equal to 0 or to 1 would have an adverse impact on the performance of the iterative interpreting process and lead to errors in the interpretation, which is prevented in this embodiment of the invention thanks to the integer refined probability detection means IPDM and to the thresholding means IRRM.

Though the above description relates to the operation of a receiver in a MIMO telecommunication system, it should be understood that the present invention may be advantageously employed in any kind of telecommunication system in which the identification of a transmitted symbol involves an iterative interpreting process intended to solve an equation of the type: Y=C.B+N, where Y is a vector representative of the received symbol y, B a vector representative of a symbol originally transmitted, C a matrix representative of the channel or channels through which said symbol has been transmitted and N a vector representative of the noise affecting said communication channel or channels.

**Claims**

1. A method for interpreting at least one signal transmitted by means of at least one transmitting antenna and received by means of at least one receiving antenna, which method includes:

. a symbol listing (SLM) step for producing a list of symbols selected among predetermined symbols which may potentially be received by means of said at least one receiving antenna, each listed symbol being represented by at least one bit,

. a marginalization (MGM) step for associating to said listed symbols at least one probability value to be associated to said at least one bit, whereby initial probability values are used for the probability values and whereby an initial probability value associated with a given listed symbol represents a distance between a given listed symbol and the received symbol,

. a decoding (DM) step for producing decoded data bits and a refined probability value on the basis of the probability values and by taking into account knowledge pertaining an encoding scheme used for encoding the transmitted signal, the refined probability value being intended to be used as an *a priori* probability value during a subsequent marginalization step,

**EP 1 545 081 B1**

the method **characterised in that** it further includes:

. a hard value detection (HVDM) step for detecting situations in which at least one of the probabilities produced by the marginalisation step and which is associated to said at least one bit representing the listed symbols is an integer value, and
. a probability value correction (PVCM) step for changing the integer probability value output to the decoding step into a non-integer value.

2. A method as claimed in claim 1, in which, the symbols selected for forming part of the list produced in the course of the symbol listing (SLM) step being included in a volume having a predetermined envelope, the probability value correction step comprises a virtual symbol creating step in the course of which a predetermined *a priori* probability value is associated with at least one point belonging to said predetermined envelope in order to create at least one virtual symbol which will be deemed featuring a different value for the bit which is invariant among all listed symbols, when said virtual symbol will be processed, in the course of the marginalization step, simultaneously with said listed symbols.

3. A method as claimed in claim 2, **characterized in that** the predetermined *a priori* probability value is chosen equal to $1/2^{(m.Nt-1)}$, where m is the number of bits representing a component of each listed symbol and Nt the number of transmitting antennas.

4. A method as claimed in claim 2, **characterized in that** the predetermined *a priori* probability value is chosen equal to a product of selected values, each of which being formed by the highest probability value produced by a previous decoding step in association with each bit.

5. A method as claimed in claim 2, **characterized in that** the predetermined *a priori* probability value is chosen equal to a product of selected values, each of which being formed by the lowest probability value produced by a previous decoding step in association with each bit having a non-integer probability value.

6. A method as claimed in any one of claims 1 to 5, in which the probability value correction (PVCM) step comprises a list modifying step in the course of which at least one additional symbol is added to the original list, said at least one additional symbol being obtained by selecting at least one listed symbol among the symbols included in the original list and complementing at least the bit which is invariant from any one symbol listed in said original list to another.

7. A method as claimed in claim 6, **characterized in that** the symbol selected in the original list in the course of the list modifying step is a symbol identified as being the most likely representative of the symbol carried by the received signal.

8. A method as claimed in any one of claims 1 to 7, in which probability value correction (PVCM) step further includes a substitution step for substituting a predetermined non-integer substitution value for the integer probability value associated to the bit which is invariant from any one symbol listed in said original list to another.

9. A method as claimed in claim 8, **characterized in that** the substitution value is equal to 1-ε if the integer probability value is 1 and equal to ε if the integer probability value is 0, where ε is a predetermined non-integer value chosen lower than 1/2.

10. A method as claimed in any one of claims 1 to claim 9, **characterized in that** it further includes :

. an integer refined probability detection (1PDM) step for detecting situations in which at least one refined probability value produced by the decoding step is an integer value, and
. a thresholding (IRRM) step for replacing such an integer refined probability value by a predetermined non-integer threshold value.

11. A method as claimed in claim 10, **characterized in that** the threshold value is equal to 1-δ if the integer refined probability value is 1 and equal to δ if the integer refined probability value is 0, where δ is a predetermined non-integer value chosen lower than 1/2.

12. A telecommunication system including at least one transmitter provided with at least one transmitting antenna and

**11**

at least one receiver provided with at least one receiving antenna, which receiver includes:

symbol listing means (SLM) for producing a list of symbols selected among predetermined symbols which may potentially be received by means of said at least one receiving antenna, each listed symbol being represented by at least one bit,

marginalization means (MGM) for associating to said listed symbols at least one probability value to be associated to said at least one bit, whereby initial probability values are used for the probability values and whereby an initial probability value associated with a given listed symbol represents a distance between a given listed symbol and the received symbol,

. decoding means (DM) for producing decoded data bits and a refined probability value on the basis of the probability values and by taking into account knowledge pertaining an encoding scheme used for encoding the transmitted signal, the refined probability value being intended to be used as an *a priori* probability value during a subsequent marginalization step,

the telecommunication system **characterized in that** the receiver further includes:

. hard value detection means (HVDM) for detecting situations in which at least one of the probabilities produced by the marginalisation means and which is associated to said at least one bit representing the listed symbols is an integer value, and

. probability value correction means (PVCM) for changing the integer probability value output to the decoding means into a non-integer value.

13. A communication device provided with at least one receiving antenna and including:

. symbol listing means (SLM) for producing a list of symbols selected among predetermined symbols which may potentially be received by means of said at least one receiving antenna, each listed symbol being represented by at least one bit,

. marginalization means (MGM) for associating to said listed symbols at least one probability value to be associated to said at least one bit, whereby initial probability values are used for the probability values and whereby an initial probability value associated with a given listed symbol represents a distance between a given listed symbol and the received symbol,

. decoding means (DM) for producing decoded data bits and a refined probability value on the basis of the probability values and by taking into account knowledge pertaining an encoding scheme used for encoding the transmitted signal, the refined probability value being intended to be used as an *a priori* probability value during a subsequent marginalization step,

which communication device further includes:

. hard value detection means (HVDM) for detecting situations in which at least one of the probabilities produced by the marginalisation means and which is associated to said at least one bit representing the listed symbols is an integer value, and

. probability value correction means (PVCM) for changing the integer probability value output to the decoding means into a non-integer value.

**Patentansprüche**

1. Verfahren zum Interpretieren wenigstens eines mittels wenigstens einer Sendeantenne gesendeten und mittels wenigstens einer Empfangsantenne empfangenen Signals, welches Verfahren folgendes enthält:

. einen Symbolauflistungs-(SLM-)Schritt zum Erzeugen einer Liste von Symbolen, die unter vorbestimmten Symbolen ausgewählt sind, die potentiell mittels der wenigstens einen Empfangsantenne empfangen werden können, wobei jedes aufgelistete Symbol durch wenigstens ein Bit dargestellt ist,

. einen Marginalisierungs-(MGM-)Schritt zum Verbinden wenigstens eines Wahrscheinlichkeitswerts mit den aufgelisteten Symbolen, um mit dem wenigstens einen Bit verbunden zu werden, wobei anfängliche Wahrscheinlichkeitswerte für die Wahrscheinlichkeitswerte verwendet werden und wobei ein anfänglicher Wahrscheinlichkeitswert, der zu einem gegebenen aufgelisteten Symbol gehört bzw. mit diesem verbunden ist, einen Abstand zwischen einem gegebenen aufgelisteten Symbol und dem empfangenen Symbol darstellt,

. einen Decodier-(DM-)Schritt zum Erzeugen decodierter Datenbits und eines verfeinerten Wahrscheinlichkeitswerts auf der Basis der Wahrscheinlichkeitswerte und durch Berücksichtigen eines Wissens, das zu einem Codierschema gehört, das zum Codieren des gesendeten Signals verwendet ist, wobei der verfeinerte Wahrscheinlichkeitswert als a-priori-Wahrscheinlichkeitswert während eines darauffolgenden Marginalisierungsschritts verwendet werden soll,

wobei das Verfahren **dadurch gekennzeichnet ist, dass** es weiterhin folgendes enthält:

. einen Schritt zur Detektion eines harten Werts (HVDM) zum Detektieren von Situationen, in welchen wenigstens eine der durch den Marginalisierungsschritt erzeugten Wahrscheinlichkeiten, welche zu dem wenigstens einen Bit gehört, das die aufgelisteten Symbole darstellt, ein ganzzahliger Wert ist, und
. einen Wahrscheinlichkeitswert-Korrektur-(PVCM-)Schritt zum Ändern des zu dem Decodierschritt ausgegebenen ganzzahligen Wahrscheinlichkeitswerts in einen nicht ganzzahligen Wert.

2. Verfahren nach Anspruch 1, wobei die Symbole, die zum Ausbilden eines Teils der Liste ausgewählt sind, die im Verlauf des Symbolauflistungs-(SLM-)Schritts erzeugt wird, in einem Volumen mit einer vorbestimmten Hüllkurve enthalten sind, der Wahrscheinlichkeitswert-Korrekturschritt einen Schritt zur Erzeugung eines virtuellen Symbols aufweist, in dessen Verlauf ein vorbestimmter a-priori-Wahrscheinlichkeitswert wenigstens einer Stelle zugeordnet wird, die zu der vorbestimmten Hüllkurve gehört, um wenigstens ein virtuelles Symbol zu erzeugen, das dazu bestimmt sein wird, einen anderen Wert für das Bit zu zeigen, der invariant unter allen aufgelisteten Symbolen ist, wenn das virtuelle Symbol im Verlauf des Marginalisierungsschritts gleichzeitig mit den aufgelisteten Symbolen verarbeitet werden wird.

3. Verfahren nach Anspruch 2, **dadurch gekennzeichnet, dass** der vorbestimmte a-priori-Wahrscheinlichkeitswert derart gewählt wird, dass er gleich $1/2^{(m.Nt-1)}$ ist, wobei m die Anzahl von Bits ist, die eine Komponente jedes aufgelisteten Symbols darstellen, und Nt die Anzahl von Sendeantennen ist.

4. Verfahren nach Anspruch 2, **dadurch gekennzeichnet, dass** der vorbestimmte a-priori-Wahrscheinlichkeitswert derart gewählt wird, dass er gleich einem Produkt von ausgewählten Werten ist, von welchen jeder durch den Wert höchster Wahrscheinlichkeit ausgebildet wird, der durch einen vorherigen Decodierschritt in Verbindung mit jedem Bit erzeugt ist.

5. Verfahren nach Anspruch 2, **dadurch gekennzeichnet, dass** der vorbestimmte a-priori-Wahrscheinlichkeitswert derart gewählt wird, dass er gleich einem Produkt von ausgewählten Werten ist, von welchen jeder durch den Wert niedrigster Wahrscheinlichkeit ausgebildet wird, der durch einen vorherigen Decodierschritt in Verbindung mit jedem Bit erzeugt ist, das einen nicht ganzzahligen Wahrscheinlichkeitswert hat.

6. Verfahren nach einem der Ansprüche 1 bis 5, wobei der Wahrscheinlichkeitswert-Korrektur-(PVCM-)Schritt einen Listenmodifizierungsschritt aufweist, in dessen Verlauf wenigstens ein zusätzliches Symbol zu der ursprünglichen Liste hinzugefügt wird, wobei das wenigstens eine zusätzliche Symbol durch Auswählen von wenigstens einem aufgelisteten Symbol unter den Symbolen erhalten wird, die in der ursprünglichen Liste enthalten sind, und durch Komplementieren von wenigstens dem Bit, das gegenüber irgendeinem in der ursprünglichen Liste aufgelisteten Symbol invariant ist, und zwar zu einem anderen.

7. Verfahren nach Anspruch 6, **dadurch gekennzeichnet, dass** das in der ursprünglichen Liste im Verlauf des Listenmodifizierungsschritts ausgewählte Symbol ein Symbol ist, das derart identifiziert wird, dass es der wahrscheinlichste Repräsentant des Symbols ist, das durch das empfangene Signal getragen wird.

8. Verfahren nach einem der Ansprüche 1 bis 7, wobei der Wahrscheinlichkeitswert-Korrektur-(PVCM-)Schritt weiterhin einen Ersatzschritt zum Ersetzen eines vorbestimmten nicht ganzzahligen Ersatzwerts für den ganzzahligen Wahrscheinlichkeitswert enthält, der zu dem Bit gehört, das gegenüber irgendeinem in der ursprünglichen Liste aufgelisteten Symbol invariant ist, und zwar zu einem anderen.

9. Verfahren nach Anspruch 8, **dadurch gekennzeichnet, dass** der Ersatzwert gleich 1-ε ist, wenn der ganzzahlige Wahrscheinlichkeitswert 1 ist, und gleich ε ist, wenn der ganzzahlige Wahrscheinlichkeitswert 0 ist, wobei ε ein vorbestimmter nicht ganzzahliger Wert ist, der kleiner als 1/2 gewählt ist.

10. Verfahren nach einem der Ansprüche 1 bis 9, **dadurch gekennzeichnet, dass** es weiterhin folgendes enthält:

. einen Schritt zur Detektion einer ganzzahligen verfeinerten Wahrscheinlichkeit (IPDM) zum Detektieren von Situationen, in welchen wenigstens ein verfeinerter Wahrscheinlichkeitswert, der durch den Decodierschritt erzeugt ist, ein ganzzahliger Wert ist, und

. einen Schwellenbildungs-(IRRM-)Schritt zum Ersetzen eines solchen ganzzahligen verfeinerten Wahrscheinlichkeitswerts durch einen vorbestimmten nicht ganzzahligen Schwellenwert.

11. Verfahren nach Anspruch 10, **dadurch gekennzeichnet, dass** der Schwellwert gleich $1-\delta$ ist, wenn der ganzzahlige verfeinerte Wahrscheinlichkeitswert 1 ist, und gleich $\delta$ ist, wenn der ganzzahlige verfeinerte Wahrscheinlichkeitswert 0 ist, wobei $\delta$ ein vorbestimmter nicht ganzzahliger Wert ist, der kleiner als 1/2 gewählt ist.

12. Telekommunikationssystem mit wenigstens einem Sender, der mit wenigstens einer Senderantenne versehen ist, und wenigstens einem Empfänger, der mit wenigstens einer Empfangsantenne versehen ist, welcher Empfänger folgendes enthält:

. eine Symbolauflistungseinrichtung (SLM) zum Erzeugen einer Liste von Symbolen, die unter vorbestimmten Symbolen ausgewählt sind, welche potentiell mittels der wenigstens einen Empfangsantenne empfangen werden können, wobei jedes aufgelistete Symbol durch wenigstens ein Bit dargestellt wird,

. eine Marginalisierungseinrichtung (MGM) zum Verbinden mit den aufgelisteten Symbolen wenigstens eines Wahrscheinlichkeitswerts, um mit dem wenigstens einen Bit verbunden zu werden, wodurch anfängliche Wahrscheinlichkeitswerte für die Wahrscheinlichkeitswerte verwendet werden und wodurch ein anfänglicher Wahrscheinlichkeitswert, der zu einem gegebenen aufgelisteten Symbol gehört, einen Abstand zwischen einem gegebenen aufgelisteten Symbol und dem empfangenen Symbol darstellt,

. eine Decodiereinrichtung (DM) zum Erzeugen decodierter Datenbits und eines verfeinerten Wahrscheinlichkeitswerts auf der Basis der Wahrscheinlichkeitswerte und durch Berücksichtigen eines Wissens, das zu einem Codierschema gehört, das zum Codieren des gesendeten Signals verwendet ist, wobei der verfeinerte Wahrscheinlichkeitswert als a-priori-Wahrscheinlichkeitswert während eines nachfolgenden Marginalisierungsschritts verwendet werden soll,

wobei das Telekommunikationssystem **dadurch gekennzeichnet ist, dass** der Empfänger weiterhin folgendes enthält:

. eine Hartwert-Detektionseinrichtung (HVDM) zum Detektieren von Situationen, in welchen wenigstens eine der durch die Marginalisierungseinrichtung erzeugten Wahrscheinlichkeiten, welche mit dem wenigstens einen Bit verbunden ist, das die aufgelisteten Symbole darstellt, ein ganzzahliger Wert ist, und

. eine Wahrscheinlichkeitswert-Korrektureinrichtung (PVCM) zum Ändern des zu der Decodiereinrichtung ausgegebenen ganzzahligen Wahrscheinlichkeitswerts in einen nicht ganzzahligen Wert.

13. Kommunikationsvorrichtung, die mit wenigstens einer Empfangsantenne versehen ist und folgendes enthält:

. eine Symbolauflistungseinrichtung (SLM) zum Erzeugen einer Liste von Symbolen, die unter vorbestimmten Symbolen ausgewählt sind, die potentiell mittels der wenigstens einen Empfangsantenne empfangen werden können, wobei jedes aufgelistete Symbol durch wenigstens ein Bit dargestellt wird,

. eine Marginalisierungseinrichtung (MGM) zum Verbinden mit den aufgelisteten Symbolen wenigstens einen Wahrscheinlichkeitswert, um mit dem wenigstens einen Bit verbunden zu werden, wobei anfängliche Wahrscheinlichkeitswerte für die Wahrscheinlichkeitswerte verwendet werden und wobei ein anfänglicher Wahrscheinlichkeitswert, der mit einem gegebenen aufgelisteten Symbol verbunden ist bzw. zu diesem gehört, einen Abstand zwischen einem gegebenen aufgelisteten Symbol und dem empfangenen Symbol darstellt,

. eine Decodiereinrichtung (DM) zum Erzeugen decodierter Datenbits und eines verfeinerten Wahrscheinlichkeitswerts auf der Basis der Wahrscheinlichkeitswerte und durch Berücksichtigen eines Wissens, das zu einem Codierschema gehört, das zum Codieren des gesendeten Signals verwendet ist, wobei der verfeinerte Wahrscheinlichkeitswert als a-priori-Wahrscheinlichkeitswert während eines nachfolgenden Marginalisierungsschritts verwendet werden soll,

welche Kommunikationsvorrichtung weiterhin folgendes enthält:

. eine Hartwert-Detektionseinrichtung (HVDM) zum Detektieren von Situationen, in welchen wenigstens eine der durch die Marginalisierungseinrichtung erzeugten Wahrscheinlichkeiten, welche mit dem wenigstens einen Bit verbunden ist, das die aufgelisteten Symbole darstellt, ein ganzzahliger Wert ist, und

. eine Wahrscheinlichkeitswert-Korrektureinrichtung (PVCM) zum Ändern des zu der Decodiereinrichtung ausgegebenen ganzzahligen Wahrscheinlichkeitswerts in einen nicht ganzzahligen Wert.

**Revendications**

1. Méthode d'interprétation d'au moins un signal transmis au moyen d'une antenne d'émission et reçu au moyen d'au moins une antenne de réception, la méthode comporte:

   . une étape de listage de symbole (SLM) pour produire une liste de symboles sélectionnés parmi des symboles prédéterminés qui peuvent être potentiellement reçus au moyen de ladite au moins une antenne de réception, chaque symbole listé étant représenté par au moins un bit,
   . une étape de marginalisation (MGM) pour associer audits symboles listés au moins une valeur de probabilité à associer audit au moins un bit, par laquelle des valeurs de probabilité initiales sont utilisées pour les valeurs de probabilité et par laquelle une valeur de probabilité initiale associée à un symbole listé donné représente une distance entre un symbole listé donné et le symbole reçu,
   . une étape de décodage (DM) pour produire des bits de données décodées et une valeur de probabilité affinée à partir des valeurs de probabilité et prenant en compte la connaissance se rapportant à un système de codage utilisé pour encoder le signal transmis, la valeur de probabilité affinée étant destinée à être utilisée comme une valeur de probabilité *a priori* pendant une étape de marginalisation ultérieure,

   la méthode est **caractérisée en ce qu'**elle comporte en outre :

   . une étape de détection de bits invariants (HVDM) pour détecter des situations dans lesquelles au moins une des probabilités produites par l'étape de marginalisation et qui est associée audit au moins un bit representant le symbole listé est une valeur entière, et
   . une étape de correction de valeur de probabilité (PVCM) pour changer la valeur de probabilité entière produite par l'étape de décodage en une valeur non entière.

2. Méthode selon la revendication 1, dans laquelle, les symboles sélectionnés pour former une partie de la liste produite au cours de l'étape de listage de symbole (SLM) sont inclus dans un volume ayant une enveloppe prédéterminée, l'étape de correction de la valeur de probabilité comprend une étape de création d'un symbole virtuel au cours de laquelle une probabilité *a priori* prédéterminée est associée à au moins un point appartenant à ladite enveloppe prédéterminée de manière à créer au moins un symbole virtuel qui sera considéré représenter une valeur différente pour le bit qui est invariant parmi tous les symboles listés, quand ledit symbole virtuel sera traité, au cours de l'étape de marginalisation, simultanément avec lesdits symboles listés.

3. Méthode selon la revendication 2, **caractérisée en ce que** la valeur de probabilité *à priori* est choisie égale à $1/2^{(m.Nt-1)}$, où m est le nombre de bits représentant une composante de chaque symbole listé et Nt est le nombre d'antennes d'émission.

4. Méthode selon la revendication 2, **caractérisée en ce que** la valeur de probabilité *à priori* est choisie égale à un produit de valeurs sélectionnées, chacune étant formée par la valeur de probabilité la plus haute produite par une précédente étape de décodage en association avec chaque bit.

5. Méthode selon la revendication 2, **caractérisée en ce que** la valeur de probabilité *à priori* est choisie égale à un produit de valeurs sélectionnées, chacune étant formée par la valeur de probabilité la plus basse produite par une précédente étape de décodage en association avec chaque bit ayant une valeur de probabilité non entière.

6. Méthode selon l'une quelconque des revendications 1 à 5, dans laquelle l'étape de correction de la valeur de probabilité (PVCM) comporte une étape de modification de liste au cours de laquelle au moins un symbole additionnel est ajouté à la liste originale, ledit au moins un symbole additionnel étant obtenu en sélectionnant au moins un symbole listé parmi les symboles inclus dans la liste originale et complémentant au moins un bit et qui est invariant de n'importe quel autre symbole listé dans la liste originale.

7. Méthode selon la revendication 6, **caractérisée en ce que** le symbole sélectionné dans la liste originale au cours de l'étape de modification de la liste est un symbole identifié comme étant le plus vraisemblablement représentatif du symbole porté par le signal reçu.

**8.** Méthode selon l'une quelconque des revendications 1 à 7, dans laquelle l'étape de correction de la valeur de probabilité (PVCM) comporte en outre une étape de substitution pour substituer une valeur prédéterminée non entière de substitution pour la valeur de probabilité entière associée au bit invariant de n'importe quel autre symbole listé dans ladite liste originale.

**9.** Méthode selon la revendication 8, **caractérisée en ce que** la valeur de substitution est égale à 1-$\varepsilon$ si la valeur de la probabilité entière est égale à 1 et égale à $\varepsilon$ si la valeur de la probabilité entière est égale à 0, où $\varepsilon$ est une valeur prédéterminée non entière choisie inférieure à 1/2.

**10.** Méthode selon l'une quelconque des revendications 1 à 9, **caractérisée en ce que** la méthode comporte en outre :

. une étape de détection de probabilité affinée entière (IPDM) pour détecter les situations dans lesquelles au moins une valeur de probabilité affinée produite par l'étape de décodage est une valeur entière, et
. une étape de seuillage (IRRM) pour remplacer cette valeur de probabilité affinée entière par une valeur de seuil prédéterminée non entière.

**11.** Méthode selon la revendication 10, **caractérisée en ce que** la valeur de seuil est égale à 1-$\delta$ si la valeur de la probabilité entière affinée est égale à 1 et égale à $\delta$ si la valeur de la probabilité entière affinée est égale à 0, où $\delta$ est une valeur prédéterminée non entière choisie inférieure à 1/2.

**12.** Un système de télécommunication incluant au moins un émetteur comportant au moins une antenne d'émission et au moins un récepteur comportant au moins une antenne de réception, le récepteur comporte:

. des moyens de listage de symbole (SLM) pour produire une liste de symboles sélectionnés parmi des symboles prédéterminés qui peuvent être potentiellement reçus au moyen de ladite au moins une antenne de réception, chaque symbole listé étant représenté par au moins un bit,
. des moyens de marginalisation (MGM) pour associer audits symboles listés au moins une valeur de probabilité à associer audit au moins un bit, par laquelle des valeurs de probabilité initiales sont utilisées pour les valeurs de probabilité et par laquelle une valeur de probabilité initiale associée à un symbole listé donné représente une distance entre un symbole listé donné et le symbole reçu,
. des moyens de décodage (DM) pour produire des bits de données décodées et une valeur de probabilité affinée à partir des valeurs de probabilité et prenant en compte la connaissance se rapportant à un système de codage utilisé pour encoder le signal transmis, la valeur de probabilité affinée étant destinée à être utilisée comme une valeur de probabilité *a priori* pendant une marginalisation ultérieure,

le système de télécommunication étant **caractérisé en ce que** le récepteur comporte en outre :

des moyens de détection de bits invariants (HVDM) pour détecter des situations dans lesquelles au moins une des probabilités produites par l'étape de marginalisation et qui est associée audit au moins un bit représentant le symbole listé est une valeur entière, et
. des moyens de correction de valeur de probabilité (PVCM) pour changer la valeur de probabilité entière produite par les moyens de décodage en une valeur non entière.

**13.** Un dispositif de communication comprenant au moins une antenne de réception et comportant:

. des moyens de listage de symbole (SLM) pour produire une liste de symboles sélectionnés parmi des symboles prédéterminés qui peuvent être potentiellement reçus au moyen de ladite au moins une antenne de réception, chaque symbole listé étant représenté par au moins un bit,
. des moyens de marginalisation (MGM) pour associer audits symboles listés au moins une valeur de probabilité à associer audit au moins un bit, par laquelle des valeurs de probabilité initiales sont utilisées pour les valeurs de probabilité et par laquelle une valeur de probabilité initiale associée à un symbole listé donné représente une distance entre un symbole listé donné et le symbole reçu,
. des moyens de décodage (DM) pour produire des bits de données décodées et une valeur de probabilité affinée à partir des valeurs de probabilité et prenant en compte la connaissance se rapportant à un système de codage utilisé pour encoder le signal transmis, la valeur de probabilité affinée étant destinée à être utilisée comme une valeur de probabilité *a priori* pendant une marginalisation ultérieure,
le dispositif de communication comporte en outre :
. des moyens de détection de bits invariants (HVDM) pour détecter des situations dans lesquelles au moins une des probabilités produites par l'étape de marginalisation et qui est associée audit au moins un bit représentant le symbole listé est une valeur entière, et

. des moyens de correction de valeur de probabilité (PVCM) pour changer la valeur de probabilité entière produite par les moyens de décodage en une valeur non entière.

## SYST

Uncb → [CHENC] —Tb→ [INTL] —Pb→ [MAPMD] —Zi→ [SPTENC] } TR

(ta1,ta2...taNt) →

FIG.1

CHNL

(ra1,ra2...raNr) →

Decb ← [CHDEC] ← PrV (ck) ← [DINTL] ← PrIV (ck) ← [DET]

SPTDEC

Exd(ck) → [INTR] → Pra(ck)

} REC

EP 1 545 081 B1

FIG.2

FIG.3

FIG.4

**REFERENCES CITED IN THE DESCRIPTION**

**Patent documents cited in the description**

- EP 1215839 A1

- EP 1221773 A1